# EUROPÄISCHE PATENTANMELDUNG

(11) **EP 1 296 213 A1**
(43) Veröffentlichungstag der Anmeldung: **26.03.2003**
(21) Anmeldenummer: 02015094.2
(22) Anmeldetag: 05.07.2002
(51) Int. Cl.: G05D 1/00

(54) **Verfahren und Vorrichtung zum Führen eines unbemannten Fluggerätes**

(30) Priorität: 21.09.2001 DE 10146514
(71) Anmelder: EMT Ingenieurbüro für Elektro-Mechanische Technologien Dipl.-Ing. Hartmut Euer, 82377 Penzberg (DE)
(72) Erfinder: Euer, Hartmut, Dipl.-Ing., 82393 Iffeldorf (DE); Wernicke, Joachim, Prof. Dr.-Ing., 14167 Berlin (DE)
(74) Vertreter: Volpert, Marcus, Dr.

(57) **Zusammenfassung**

Bislang erfolgt ein Verfahren zum Führen eines unbemannten Fluggerätes durch die folgenden Schritte: Aufnehmen von Bewegtbildern des Flugsichtbereiches an Bord des Fluggerätes, Übertragen der aufgenommenen Bewegtbilder an eine Bodenstation, Anzeigen der übertragenen Bewegtbilder. Mit Hilfe des neuen Verfahrens und der neuen Vorrichtung soll ein Führen des unbemannten Fluggerätes nach Sichtflugregeln möglich sein.

Erfindungsgemäss erfolgt das Aufnehmen der Bewegtbilder mit mindestens zwei unterschiedlichen Bildaufnahmewinkeln (30 - 32), werden die derart aufgenommenen Bewegtbilder einem Bodenpiloten (22) in passender Überlagerung angezeigt, und erfolgt das Aufnehmen zumindest eines wesentlichen Teils der Bewegtbilder entsprechend der Blickrichtung (21) des Bodenpiloten (22), wobei bei Feststellung anderer potentiell auf Kollisionskurs befindlicher Fluggeräte Ausweichmanöver durchgeführt werden.

Führen von unbemannten Fluggeräten nach Sichtflugregeln vom Boden aus.

## Beschreibung

Die Erfindung bezieht sich auf ein Verfahren zum Führen eines unbemannten Fluggerätes nach dem Oberbegriff des Patentanspruchs 1 sowie auf eine Vorrichtung zum Führen eines unbemannten Fluggerätes nach dem Oberbegriff des Patentanspruchs 9.

Unbemannte Fluggeräte können nach den geltenden Luftverkehrsvorschriften dann am allgemeinen Luftverkehr gemäss den einzuhaltenden Sichtflugregeln teilnehmen, wenn ein verantwortlicher Bodenpilot vorhanden ist, der über dieselben Sichtinformationen verfügt, welche ein Pilot an Bord des Fluggerätes beim Blick aus dem Cockpit hätte, um den das Fluggerät umgebenden Flugverkehr zu beobachten und erforderlichenfalls Ausweichmanöver gemäss der Grundregel "See-and-Avoid" zur Kollisionsvermeidung fliegen zu können.

Aus der Praxis ist bekannt, auf der Grundlage der Fernsehtechnik, insbesondere der Videotechnik, Bewegtbilder des Flugsichtbereichs an Bord eines unbemannten Fluggerätes aufzunehmen, die aufgenommenen Bewegtbilder an eine Bodenstation zu übertragen und einem Bodenpiloten die übertragenen Bewegtbilder auf einem elektronischen Bildschirm anzuzeigen.

Die geringe Objektauflösung solcher Videobilder nach dem Stand der Technik, zum Beispiel gemäss der CCIR/PAL-Norm, genügt bei der üblichen weitwinkligen Beobachtung des Flugsichtbereiches jedoch nicht den Anforderungen für die Entdeckung entfernter Objekte, wie beispielsweise auf potentiellem Kollisionskurs befindlichen anderen Fluggeräten.

Die Objektauflösung solcher Videobilder nach dem Stand der Technik könnte beispielsweise durch Verwendung von Teleobjektiven erhöht werden. Dabei geht allerdings der mit der in Kauf zu nehmenden Einengung des Gesichtsfeldes verbundene Gesamtüberblick verloren. Um den Gesamtüberblick zurückzugewinnen, hätte der Bodenpilot in regelmässigen Abständen durch Bewegung der Blickrichtung der Teleoptik den vorausliegenden Luftraum abzuscannen. Der Bodenpilot wäre hinsichtlich seiner Wahrnehmungs- und Bildverarbeitungsleistung jedoch nach kurzer Zeit mental überfordert, so dass basierend auf diesem Vorschlag ein Führen eines unbemannten Fluggerätes nach Sichtflugregeln nicht möglich ist.

Grundsätzlich scheint die Verwendung einer Videobildtechnik mit vielfach gesteigerter Pixelauflösung gegenüber der Standard-Videotechnik ebenfalls für die Darstellung relalistischer Flugsichtszenen geeignet zu sein. Eine solche Videobildtechnik ist bislang allerdings nicht Stand der Technik. Falls eine solche Videobildtechnik in Zukunft verfügbar ist, wäre der Frequenz-Bandbreitenbedarf der Funk-Bildübertragung gegenüber demjenigen des Standes der Technik vielfach gesteigert, so dass die für die Funkübertragung aus unbemannten Fluggeräten verfügbaren Kanalkapazitäten überschritten wären.

Bislang ist es daher nicht möglich, unbemannte Fluggeräte im unkontrollierten Luftraum nach den geltenden Sichtflugregeln fliegen zu können. Der kontrollierte Luftraum, welcher üblicherweise oberhalb des unkontrollierten Luftraums liegt, ist für unbemannte Fluggeräte relativ hoch und daher für den Einsatz solcher Geräte wenig interessant.

Der Erfindung liegt daher die Aufgabe zugrunde, ein Verfahren der eingangs angegebenen Art zu schaffen, gemäss dem ein unbemanntes Fluggerät nach den geltenden Sichtflugregeln fliegen kann. Der Erfindung liegt ferner die Aufgabe zugrunde, eine Vorrichtung der eingangs erwähnten Art zu schaffen, mit dem ein Führen des unbemannten Fluggerätes nach den geltenden Sichtflugregeln möglich ist.

Diese Aufgabe wird erfindungsgemäss durch ein Verfahren mit den Merkmalen des Patentanspruchs 1 sowie durch eine Vorrichtung mit den Merkmalen des Patentanspruchs 9 gelöst.

Vorteilhafte Weiterbildungen sind Gegenstand der jeweiligen Unteransprüche.

Durch das Aufnehmen der Bewegtbilder mit oder aus mindestens zwei unterschiedlichen Bildaufnahmewinkeln, das Überlagern dieser Bewegtbilder und das Aufnehmen der Bewegtbilder entsprechen der Blickrichtung eines beispielsweise an einer Bodenstation befindlichen Bodenpiloten, kann diesem einerseits ein weitgehend realitätsgetreues Bild des Flugsichtbereichs angezeigt werden; andererseits erfolgt das Aufnehmen der Bewegtbilder in Abhängigkeit von der Blickrichtung des Bodenpiloten, so dass dieser die Blickrichtung und damit den aufzunehmenden Teil des Flugsichtbereiches selbst bestimmt und festlegt. Bei Feststellung anderer potentiell auf Kollisionskurs befindlicher Fluggeräte kann der Bodenpilot dann entsprechende Ausweichmannöver durchführen. Vorteilhaft ist dabei, dass das erfindungsgemässe Verfahren unter Nutzung von Komponenten der Standardvideotechnik und mittels üblichen Funkübertragungskomponenten auf Grund von Kanalkapazitäten entsprechend Standardvideokanälen durchgeführt werden kann. Damit ist ein Führen eines unbemannten Fluggeräts nach Sichtflugregeln auf relativ einfache Weise möglich. Solche Fluggeräte könnten damit beispielsweise auch im unkontrollierten Luftraum eingesetzt werden.

Vorteilhafterweise überlagern schmalwinklige Bewegtbilder jeweils weitwinkligere Bewegtbilder, wobei die Bewegtbilder vorzugsweise in konzentrischer oder nahezu konzentrischer Weise überlagert angezeigt werden. Damit sind die angezeigten Bewegtbilder jeweils aus mindestens zwei Bildern zusammengesetzt, die aus unterschiedlichen Bildaufnahmewinkeln aufgenommen worden sind. Dadurch erhält der Bodenpilot eine Anzeige des Flugsichtbereichs, welche aus einem zwar eingeengteren, aber dafür mit einer höheren Bildauflösung versehenen Bildbereich und einem weitwinkligeren Bildbereich mit allerdings verringerter Bildauflösung kombiniert ist. Eine solche Anzeige ist zumindest ein Stück weit an die menschliche Sehauflösung bzw. Sehschärfe angepasst.

Gemäss einer Weiterbildung der Erfindung liegt der gemeinsame Bildmittelpunkt der überlagerten Bewegtbilder genau in Blickrichtung des Bodenpiloten. Dadurch erhält der Bodenpilot den Eindruck, er selbst sitze im Cockpit des Fluggeräts und überwache den Flugsichtbereich, d.h. den vorausliegenden Luftraum, des Fluggeräts, was die realitätsgetreue Anzeige und Wahrnehmung durch den Bodenpiloten weiter verbessert.

Gemäss einer anderen Weiterbildung werden die Bewegtbilder nicht mit scharfen Rändern sondern mit vorzugsweise stetig zum Bildrand zunehmender Transparenz überlagert. Diese Weiterbildung hat den Vorteil, dass dem Betrachter, beispielsweise also dem Bodenpiloten, der Umstand der Bildüberdeckung bzw. -überlagerung nicht auffällt und so ein noch realistischerer Bildeindruck entsteht.

Gemäss einer vorteilhaften Weiterbildung der Erfindung werden die schmalwinkligsten Bewegtbilder als vergrösserte Bewegtbilder gewonnen. Auf diese Weise ist es möglich, die "Entdeckungsreichweite" für potentiell auf Kollisionskurs befindliche Fluggeräte zu steigern.

Gemäss einer besonders bevorzugten Ausführungsform der Erfindung erfolgt das Aufnehmen der Bewegtbilder mit Bildaufnahmewinkeln und diesen jeweils zugeordneten Bildauflösungen, die an diejenigen der etwa symmetrischen Sehschärfekurve des menschlichen Auges angepasst sind. Damit kann der Bodenpilot ein Bild sehen, das der realen Flugsicht in seiner momentanen Blickrichtung entspricht und gleichzeitig seiner Sehauflösung angepasst ist. Die Sehschärfe des menschlichen Auges besitzt nämlich im Zentralbereich, d.h. nahe der optischen Achse, ein scharfes, d.h. deutlich ausgeprägtes, Maximum, welches etwa einer Bogenminute Winkelauflösung entspricht. Mit zunehmener Winkelablage aus der optischen Achse nimmt die Sehschärfe des menschlichen Auges stark ab. Erfindungsgemäss können also die aufgenommenen Bewegtbilder derart überlagert werden, dass das schmalwinkligst aufgenommene Bewegtbild und das weitwinkligst aufgenommene Bewegtbild in ihren Bildwinkeln und ihrer Bildauflösung derart miteinander kombiniert sind, dass das zur Anzeige gebrachte Bewegtbild hinsichtlich des Bildwinkels und der Bildauflösung der zentralen Sehauflösung des menschlichen Auges entspricht. Dadurch wird die realitätsgetreue Abbildung und Anzeige des Flugsichtbereiches weiter verbessert.

Gemäss einer anderen Weiterbildung der Erfindung wird in den aufgenommenen Bewegtbildem mit Hilfe von Bildverarbeitungstechniken automatisch nach anderen Fluggeräten gesucht, wobei vorzugsweise der gesamte Flugsichtbereich systematisch im sequentiellen Takt abgescannt und ausgewertet wird, und gegebenenfalls erforderliche Ausweichmanöver vorzugsweise automatisch durchgeführt werden. Mit einer solchen Automatik wird allerdings das Prinzip der menschlichen Verantwortung für die eingangs erwähnte "See-and-Avoid"-Sichtflugführung des unbemannten Fluggerätes aufgegeben und eine hinsichtlich der Luftverkehrsvorschriften bisher noch nicht geregelte Situation erreicht. Es wird darauf hingewiesen, dass bei dieser Weiterbildung ein Aufnehmen der Bewegtbilder entsprechend der Blickrichtung eines Bodenpiloten entfallen kann.

Vorrichtungsseitig ist die Kameraanordnung derart angeordnet und ausgebildet, dass die Bewegtbilder damit aus mindestens zwei unterschiedlichen Bildaufnahmewinkeln aufgenommen werden, wobei eine Mischeinrichtung zur passenden Überlagerung der aufgenommenen Bilder, eine Blickrichtungs-Erfassungseinrichtung, mit der die Blickrichtung eines Bodenpiloten erfassbar und das Aufnehmen zumindest eines Teils der Bewegtbilder entsprechend der Blickrichtung beeinflussbar ist, und eine Einrichtung zum Fernsteuern des Fluggerätes vorgesehen sind. Damit kann die Kameraanordnung mit gestuften Bildaufnahmewinkeln, beispielsweise von "Weitwinkel" bis "Tele", arbeiten. Die Übertragung der Videobildsignale der Kameraanordnung zum Arbeitsplatz eines Bodenpiloten, beispielsweise zu einer Bodenstation, erfolgt vorteilhafterweise per Funk.

Gemäss einer Ausführungsform der Erfindung weist die Kameraanordnung eine elektronische Bewegtbildkamera, vorzugsweise eine Videokamera, auf, mittels der durch schnellen sequentiellen Wechsel von Tele- und Weitwinkelobjektiven ein sequentieller Datenstrom der Teleund Weitwinkelbewegtbilder erzeugbar ist. Dieser Datenstrom kann nach Funkübertragung an der Bodenstation in die zugrundeliegenden Einzelbilder aufgeteilt werden. Bei dieser Kameraanordnung ist also lediglich eine einzige Bewegtbildkamera erforderlich, welche am Fluggerät installiert ist.

Gemäss einer bevorzugten Ausführungsform der Erfindung weist die Kameraanordnung wenigstens zwei elektronische Bewegtbildkameras, vorzugsweise Videokameras, mit gestuften Bildaufnahmewinkeln vorzugsweise von "Tele" bis "Weitwinkel" auf, wobei vorzugsweise die optischen Achsen der wenigstens zwei Bewegtbildkameras raumparallel zueinander ausgerichtet sind. Die eine Bewegtbildkamera kann somit eine Videokamera mit Teleobjektiv, die andere eine solche mit Weitwinkelobjektiv sein, so dass der zuvor hinsichtlich lediglich einer Bewegtbildkamera angegebene schnelle sequentielle Wechsel von Tele- und Weitwinkelobjektiv bei dieser Ausführungsform nicht erforderlich ist. Dadurch ist die Reparaturanfälligkeit der verwendeten Kameras reduziert, die Betriebskosten der gesamten Vorrichtung sind dadurch verringert.

Gemäss einer vorteilhaften Weiterbildung der Erfindung ist wenigstens eine Kamera der Kameraanordnung um zwei Raumachsen, vorzugsweise die Nickachse und die Gierachse, ferngesteuert schwenkbar am Fluggerät angeordnet, wobei es gemäss einer Weiterbildung der Erfindung möglich ist, die weitwinkligste Bewegtbildkamera ortsfest am Fluggerät zu installieren. Bei der letztgenannten Ausführungsform ist also lediglich die schmalwinkligste Bewegtbildkamera schwenkbar am Gerät installiert. Der Weitwinkel der weitwinkligsten Bewegtbildkamera kann derart gewählt sein, dass damit nahezu der gesamte Flugsichtbereich abgedeckt ist. Die weitwinkligste Bewegtbildkamera kann damit ein Übersichtsbild des gesamten Flugsichtbereiches liefern, allerdings, wie zuvor erwähnt, mit geringerer Pixelauflösung. Es ist aber auch möglich, die gesamte Kameraanordnung mit ihren sämtlichen Kameras schwenkbar am Fluggerät zu installieren.

Vorteilhafterweise sind die mittels der Kameraanordnung aufgenommenen Bewegtbilder jeweils konzentrisch oder nahezu konzentrisch überlagert anzeigbar, wobei vorzugsweise der gemeinsame Mittelpunkt der überlagerten Bewegtbilder genau in Blickrichtung des Bodenpiloten angeordnet ist. Dadurch wird vorrichtungsseitig die, wie zuvor in bezug auf das erfindungsgemässe Verfahren erwähnte, weitgehend realitätsgetreue Abbildung des Flugsichtbereiches unterstützt und ermöglicht.

Gemäss einer anderen Weiterbildung der Erfindung ist die Überlagerung der angezeigten Bewegtbilder durch Komponenten der Bildverarbeitung derart gestaltet, dass die Bewegtbilder nicht mit scharfen Rändern sondern mit vorzugsweise stetig zum Bildrand zunehmender Transparenz versehen sind. Dadurch entsteht an der Anzeigeeinrichtung ein noch realitätsgetreueres Bild des aufgenommenen Flugsichtbereiches.

Gemäss einer besonders bevorzugten Ausführungsform der Erfindung ist die schmalwinkligste Bewegtbildkamera, vorzugsweise jede Bewegtbildkamera, bezüglich ihres Bildaufnahmewinkels und ihrer diesem zugeordneten Bildauflösung so dimensioniert, dass die resultierenden Pixelauflösungen der jeweiligen Bewegtbildkamera an die etwa symmetrische Sehschärfekurve des menschlichen Auges angepasst sind. Dadurch ist die Möglichkeit geschaffen, dass der Bodenpilot an der Anzeigeeinrichtung ein Bild sieht, das seiner Sehschärfekurve angepasst ist, wodurch eine weitgehend realitätsgetreue Abbildung des Flugsichtbereiches gewährleistet sein kann.

Gemäss einer vorteilhaften Weiterbildung der Erfindung erfasst die Blickrichtungs-Erfassungseinheit sowohl die Kopfstellung als auch die Augenbewegung des Bordpiloten, wobei die Kameraanordnung dementsprechend steuerbar ist. Es ist klar, dass die Blickrichtung der bordseitigen Kameraanordnung bei dieser Ausführungsform stets genau und vor allem ohne merklichen Zeitverlust der Blickrichtung des Piloten folgt. Damit kann der Bodenpilot selbst bestimmen, an welcher Stelle der Flugsichtbereich erfasst und überwacht werden soll. Die Blickrichtungs-Erfassungseinrichtung kann beispielsweise ein am oder nahe dem Kopf des Bodenpiloten installierter Blickrichtungs-Erfassungssensor, beispielsweise eine Blickbewegungskamera, sein.

Ausführungsbeispiele des Erfindungsgegenstandes werden nachfolgend an Hand der Zeichnung näher erläutert, wobei alle beschriebenen und/oder bildlich dargestellten Merkmale für sich oder in beliebiger Kombination den Gegenstand der vorliegenden Erfindung unabhängig von ihrer Zusammenfassung in den Ansprüchen oder deren Rückbeziehung bilden. Es zeigen:
- Fig. 1: eine schematische Darstellung einer Vorrichtung zum Führen eines unbemannten Fluggerätes; und
- Fig. 2: eine schematische Darstellung einer Überlagerung konzentrischer Teilbilder gemäss der Sehschärfekurve des menschlichen Auges.

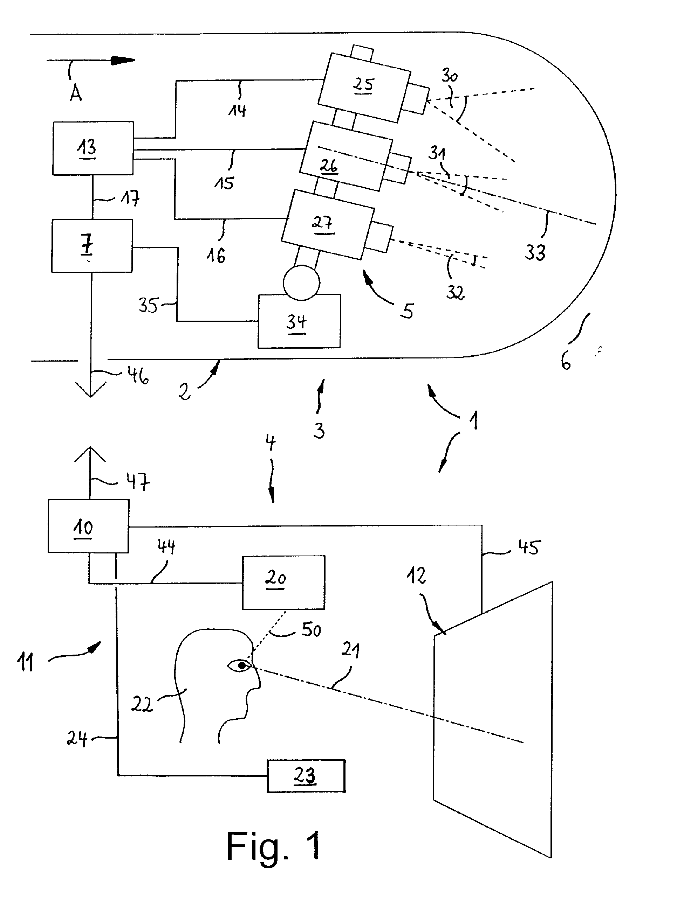

In Fig. 1 ist eine bevorzugte Ausführungsform einer Vorrichtung 1 zum Führen eines unbemannten, in Fig. 1 lediglich teilweise dargestellten Fluggerätes 2 schematisch in einer Seitenansicht dargestellt.

Die Vorrichtung 1 hat einen bordseitigen, in Fig. 1 oben dargestellten Teil 3 sowie einen bodenseitigen, in Fig. 1 unten dargestellten Teil 4. Die Vorrichtung 1 hat in ihrem bordseitigen Teil 3 eine Kameraanordnung 5 zum Aufnehmen von Bewegtbildern des Flugsichtbereiches 6, d.h. des vorausliegenden Luftraumes, welcher sich in Fig. 1 rechts vom Fluggerät befindet. Demnach bewegt sich das Fluggerät 2 beispielsweise in Richtung parallel zum Pfeil A. Die Vorrichtung 1 hat in ihrem bordseitigen Teil 3 ferner eine Sender-Empfänger-Einheit 7 und in ihrem bodenseitigen Teil 4 eine Empfänger-Sender-Einheit 10 zum Übertragen der aufgenommenen Bewegtbilder an eine Bodenstation 11, welche insbesondere den bodenseitigen Teil 4 der Vorrichtung 1 umfasst. Ausserdem hat die Vorrichtung 1 eine Einrichtung 12 zum Anzeigen der übertragenen Bewegtbilder, welche zum bodenseitigen Teil 4 der Vorrichtung 1, d.h. insbesondere zur Bodenstation 11, gehört. Die Anzeigeeinrichtung 12 ist beispielsweise ein Bilddarstellungsgerät, insbesondere ein Computermonitor, welches Bildauflösungen besitzt, die wesentlich über der Standard-Videoauflösung liegen und bei geeignetem Betrachtungsabstand der menschlichen Sehauflösung entsprechen.

Erfindungsgemäss ist die Kameraanordnung 5 derart angeordnet und ausgebildet, dass die Bewegtbilder damit aus mindestens zwei unterschiedlichen Bildaufnahmewinkeln aufgenommen werden. Die Vorrichtung umfasst ferner eine Mischeinrichtung 13 zur passenden Überlagerung der aufgenommenen Bilder, wobei die Mischeinrichtung 13 über Bildsignalleitungen 14, 15, 16 mit der Kameraanordnung 5 verbunden ist. Die Mischeinrichtung 13 wiederum ist über eine Leitung 17 mit der Sender-Empfänger-Einheit 7 verbunden, durch welche das kombinierte Bildsignal von letzterer Einheit übertragen wird.

An ihrem bodenseitigen Teil 4 hat die Vorrichtung 1 ausserdem eine Blickrichtungs-Erfassungseinrichtung 20, mit der die Blickrichtung 21 eines schematisch lediglich angedeuteten Bodenpiloten 22 auf die Anzeigeeinrichtung 12 erfassbar und das Aufnehmen zumindest eines Teils der Bewegtbilder entsprechend dieser Blickrichtung des Bodenpiloten beeinflussbar ist. Schliesslich hat die Vorrichtung an ihrer Bodenstation 11 ferner eine Einrichtung 23 zum Fernsteuern des Fluggerätes 2, welche über eine Signalleitung 24 mit der Empfänger-Sender-Einheit 10 verbunden ist oder auch so ausgebildet sein kann, dass sie entsprechende Fernsteuersignale direkt an das Fluggerät 2 überträgt.

Gemäss einer ersten, nicht näher gezeigten Ausführungsform der Erfindung weist die Kameraanordnung 5 lediglich eine elektronische Bewegtbildkamera, vorzugsweise eine Videokamera auf, mit der durch schnellen sequentiellen Wechsel von Tele- und Weitwinkelobjektiven ein sequentieller Datenstrom der Tele- und Weitwinkelbewegtbilder erzeugbar und zur Mischeinrichtung 13 übertragbar ist.

Gemäss einer anderen Ausführungsform der Erfindung weist die Kameraanordnung 5 wenigstens zwei, gemäss der in Fig. 1 dargestellten Ausführungsform drei elektronische Bewegtbildkameras 25, 26, 27 auf, die vorzugsweise als Videokameras ausgestaltet sind und mit gestuften Bildaulhahmewinkeln vorzugsweise von "Tele" bis "Weitwinkel" ausgestattet sind. So ist die in Fig. 1 obere Bewegtbildkamera 25 beispielsweise eine Weitwinkelkamera, die mittlere Bewegtbildkamera 26 eine Kamera mit Normalobjektiv und die untere Bewegtbildkamera 27 eine Kamera mit Teleobjektiv. Dementsprechend verringern sich die Bildaufnahmewinkel 30, 31, 32 in Fig. 1 von oben nach unten. Die optischen Achsen, von denen in Fig. 1 der besseren Übersicht halber lediglich die optische Achse 33 der mittleren Bewegtbildkamera 26 gezeigt ist, sind raumparallel zueinander ausgerichtet.

Für ein Videosystem gemäss dem PAL-Standard mit einer Pixelauflösung von 768 Pixel in horizontaler Richtung x 576 Pixel in vertikaler Richtung folgt daraus ein Bildfeld für die schmalwinkligste Kamera, das ist gemäss Fig. 1 die untere Bewegtbildkamera 27, von maximal etwa 12° x 9°.

Wenigstens eine Kamera, nämlich diejenige Bewegtbildkamera mit dem schmalwinkligsten Bildaufnahmewinkel, d.h. im Falle der Fig. 1 die Bewegtbildkamera 27, der Kameranordnung 5 ist um zwei Raumachsen, vorzugsweise die Nickachse und die Gierachse, mittels eines Schwenkmechanismus 34 ferngesteuert schwenkbar am Fluggerät 2 angeordnet. Gemäss der in Fig. 1 gezeigten Ausführungsform sind sämtliche Kameras 25 - 27 der Kameraanordnung 5 um die genannten Achsen schwenkbar, wobei eine Schwenkbewegung um die Nickachse ein Verschwenken der Kameraanordnung nach oben bzw. unten und ein Verschwenken der Anordnung um die sogenannte Gierachse ein Schwenken der Kameraanordnung nach rechts bzw. links ermöglicht. Es ist klar, dass auch der Schwenkmechanismus 34 über eine Signalleitung 35 mit der Sender-Empfänger-Einheit 7 gekoppelt ist.

Gemäss einer anderen, nicht gezeigten Ausführungsform der Erfindung ist es auch möglich, die weitwinkligste Bewegtbildkamera, das ist im Falle der Ausführungsform der Fig. 1 die Bewegtbildkamera 25, ortsfest am Fluggerät 2 zu installieren und lediglich die schmalwinkligste Bewegtbildkamera oder gemäss der Ausführungsform in Fig. 1 die Bewegtbildkameras 26 und 27 schwenkbar am Fluggerät zu befestigen.

Erfindungsgemäss sind die mittels der Kameraanordnung 5 aufgenommenen Bewegtbilder vorzugsweise mittels der Mischeinrichtung 13 jeweils konzentrisch oder nahezu konzentrisch überlagert an der Anzeigeeinrichtung 12 anzeigbar, wobei vorzugsweise der gemeinsame Mittelpunkt der überlagerten Bewegtbilder genau in Blickrichtung 21 des Bodenpiloten angeordnet ist. Die erwähnte Anzeigeeinrichtung ist beispielsweise ein Projektionsschirm oder eine nicht näher gezeigte Monitorbrille für den Bodenpiloten. Bei den angezeigten Bildern überdecken jeweils schmalwinklige Bewegtbilder weitwinkligere Bewegtbilder. Wie erwähnt, erfolgt die Überlagerung der Bewegtbilder vorzugsweise durch die Mischeinrichtung 13 im bordseitigen Teil 3 der Vorrichtung 1. Es ist aber auch möglich, die Mischeinrichtung 13 im bodenseitigen Teil 4 der Vorrichtung 1 auszubilden und die von der Kameranordnung übertragenen Signale erst am Boden zu einem gemeinsamen Bewegtbild zusammenzubringen. Gemäss einer bevorzugten, nicht näher gezeigten Ausführungsform der Erfindung ist die Überlagerung der angezeigten Bewegtbilder durch Komponenten der Bildverarbeitung derart gestaltet, dass die Bewegtbilder nicht mit scharfen Rändern sondern mit vorzugsweise stetig zum Bildrand zunehmender Transparenz versehen sind.

Die Kameraanordnung 5 kann ferner gemäss einer Weiterbildung der Erfindung derart ausgebildet sein, dass das schmalwinkligste Bewegtbild, d.h. das dem Teleobjektiv mit der grössten Brennweite entsprechende Bild, durch Wahl einer längeren Brennweite als vergrössertes Bild entsprechend dem Blick durch ein Fernglas gewonnen wird.

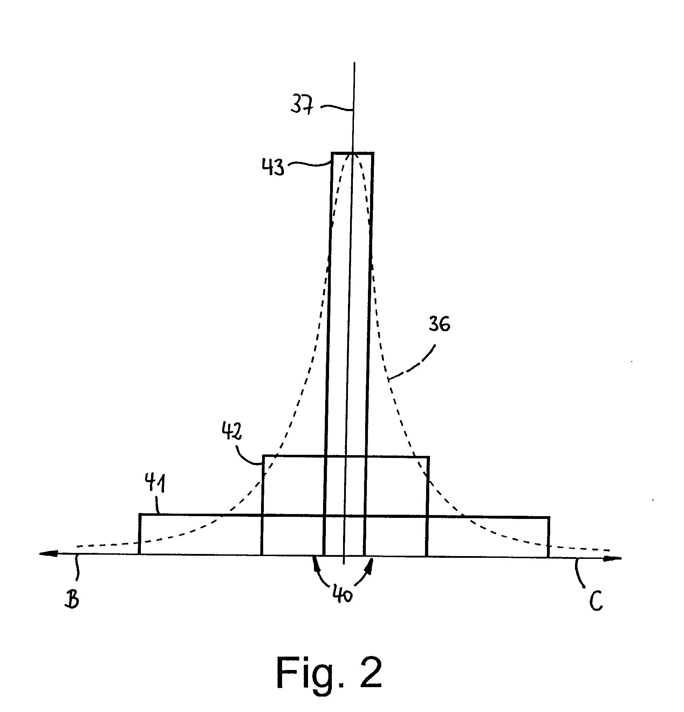

Gemäss einer besonders bevorzugten Ausführungsform der Erfindujng ist die schmalwinkligste Bewegtbildkamera 27, vorzugsweise jedoch jede Bewegtbildkamera 25 - 27, bezüglich ihres Bildaufnahmewinkels und ihrer diesem zugeordneten Bildauflösung so dimensioniert, dass die resultierenden Pixelauflösungen der jeweiligen Bewegtbildkamera an die etwa symmetrische Sehschärfekurve 36 des menschlichen Auges angepasst ist. Eine solche Sehschärfekurve ist schematisch in gestrichelten Linien in Fig. 2 gezeigt.

In Fig. 2 ist die Sehauflösung bzw. Sehschärfe in Abhängigkeit der Winkelablage 40 von der optischen Achse 37 dargestellt, wobei die Winkelablage 40 von der optischen Achse 37 in den beiden Richtungen B und C zunimmt. Die Sehschärfekurve 36 zeigt also die Pixelauflösung des menschlichen Auges in Abhängigkeit von der Winkelablage aus der optischen Achse 37. Fig. 2 verdeutlicht, dass die Sehschärfekurve 36 des menschlichen Auges ein scharfes, d.h. deutlich ausgeprägtes Maximum der Sehauflösung im Bereich kleiner Winkelablagen 40 aus der optischen Achse 37 hat. Mit zunehmender Winkelablage 40 fällt die Sehschärfekurve 36 dann deutlich ab. Die Auflösungen 41 - 43 der mit den Bewegtbildkameras 25 - 27 der Kameraanordnung 5 aufgenommenen Bilder sind in bezug auf jede der genannten Kameras in Fig. 2 angegeben und in der Weise der Sehschärfekurve 36 des menschlichen Auges angepasst, dass die resultierenden Pixelauflösungen etwa den Verlauf der Sehschärfekurve nachbilden und damit zu diesem passen.

Die in Fig. 2 gezeigte Auflösung 41 entspricht derjenigen der Bewegtbildkamera 25 (Weitwinkelkamera), die Pixelauflösung 42 derjenigen der Bewegtbildkamera 26 (Normalwinkelkamera) und die Pixelauflösung 43 entspricht derjenigen der Bewegtbildkamera 27 (schmalwinkligste Kamera).

Die Blickrichtungs-Erfassungseinrichtung 20 erfasst sowohl die Kopfstellung als auch die Augenbewegung des Bordpiloten, wobei die Kameraanordnung 5 entsprechend der Blickrichtung des Bodenpiloten steuerbar ist.

Gemäss einer anderen, nicht gezeigten Ausführungsform der Erfindung ist es möglich, mit Hilfe von Techniken der Bildverarbeitung in den aufgenommenen Bewegtbildern automatisch nach anderen Fluggeräten zu suchen. Diese anderen Fluggeräte heben sich in ihrer Bewegung vom allgemeinen Himmels- und Erdhintergrund ab. Die aufgefundenen Objekte oder Geräte können gemäss einer Ausgestaltung der Erfindung in der Darstellung der aufgenommenen Bewegtbilder, d.h. auf der Anzeigeeinrichtung 12, auffällig dargestellt werden. Dies kann beispielsweise durch eine Einfärbung oder durch Blinken erfolgen. Es ist auch möglich, die voraussichtliche Flugbahn der aufgefundenen Objekte oder Geräte zu extrapolieren und darzustellen, um die Beurteilung einer Kollisionsgefahr zu erleichtern.

Gemäss einer anderen Ausführungsform der Erfindung ist es möglich, die Suche nach anderen Fluggeräten automatisch auf den gesamten Flugsichtbereich auszudehnen, indem der gesamte Flugsichtbereich systematisch beispielsweise im sequentiellen Takt abgescannt und ausgewertet wird. Auf diese Weise ist eine vollautomatische Entdeckung anderer Fluggeräte möglich, wobei eine weitere Ausgestaltung der Erfindung mit einer Automatik zum Durchführen von systematisch erforderlichen Ausweichmanövern ausgestattet sein kann. In den vorerwähnten Fällen einer automatischen Suche nach anderen Fluggeräten und insbesondere beim vollautomatischen Entdecken anderer Fluggeräte und bei der vollautomatischen Durchführung von Ausweichmanövern kann die zuvor erläuterte Blickrichtungs-Erfassungseinrichtung 20 entfallen, da gemäss dieser Weiterbildung der Erfindung ein Bodenpilot nicht mehr erforderlich ist. Es bleibt künftigen Luftverkehrsvorschriften vorbehalten, ob mit Hilfe der vollautomatischen erfindungsgemässen Vorrichtung ein Fliegen von unbemannten Fluggeräten nach Sichtflugregeln gestattet ist.

Es ist klar, dass auch die Blickrichtungs-Erfassungseinrichtung 20 und die Anzeigeeinrichtung 12 über Signalleitungen 44, 45 mit der Empfänger-Sender-Einheit 10 verbunden sind. Ferner haben sowohl die Sender-Empfänger-Einheit 7 als auch die Empfänger-Sender-Einheit 10 zum Übertragen der Bildsignale jeweils eine Antenne 46, 47.

Die Blickrichtungs-Erfassungseinrichtung 20 ist beispielsweise eine Blickbewegungskamera, die mittels einer damit verbundenen Lichtstrahlführung 50 die Blickrichtung 21 des Bodenpiloten 22 ermittelt und als Blickrichtungssignal über die Signalleitung 44 und die Empfänger-Sender-Einheit 10 sowie die Sender-Empfänger-Einheit 7 und die Signalleitung 35 an den bordseitigen Schwenkmechanismus 34 übertragen wird. Damit ist die bordseitige Kameraanordnung 5 nach den die Blickrichtung des Bodenpiloten betreffenden, funkübermittelten Angaben schwenk- und steuerbar.

Nachfolgend wird das erfindungsgemässe Verfahren zum Führen eines unbemannten Fluggerätes teilweise mit Bezug auf die Fig. 1 und 2 näher erläutert.

Das Verfahren basiert zunächst auf den folgenden Schritten:
(a) Aufnehmen von Bewegtbildern des Flugsichtbereiches, d.h. des vorausliegenden Luftraumes, an Bord des Fluggerätes 2;
(b) Übertragen der gemäss (a) aufgenommenen Bewegtbilder an eine Bodenstation 11;
(c) Anzeigen der gemäss (b) übertragenen Bewegtbilder beispielsweise an der Bodenstation.

Erfindungsgemäss erfolgt das Aufnehmen der Bewegtbilder mit mindestens zwei unterschiedlichen Bildaufnahmewinkeln, werden die derart aufgenommenen Bewegtbilder einem Bodenpiloten in passender Überlagerung angezeigt und erfolgt das Aufnehmen zumindest eines wesentlichen Teils der Bewegtbilder entsprechend der Blickrichtung des Bodenpiloten, wobei bei Feststellung anderer potentiell auf Kollisionskurs befindlicher Fluggeräte Ausweichmanöver durchgeführt werden.

Gemäss einer bevorzugten Ausführungsform überlagern schmalwinklige Bewegtbilder jeweils weitwinkligere Bewegtbilder, wobei die Bewegtbilder vorzugsweise in konzentrischer oder nahezu konzentrischer Überlagerung angezeigt werden. Dabei liegt der gemeinsame Mittelpunkt der überlagerten Bewegtbilder vorzugsweise genau in Blickrichtung des Bodenpiloten.

Gemäss einer vorteilhaften Ausgestaltung des erfindungsgemässen Verfahrens werden die Bewegtbilder nicht mit scharfen Rändern, sondern mit vorzugsweise stetig zum Bildrand zunehmender Transparenz überlagert. Gemäss einer weiteren Ausrührungsform werden die schmalwinkligsten Bewegtbilder als vergrösserte Bewegtbilder gewonnen. Gemäss einer besonders bevorzugten Ausführungsform des erfindungsgemässen Verfahrens erfolgt das Aufnehmen der Bewegtbilder mit Bildaufnahmewinkeln und diesen jeweils zugeordneten Bildauflösungen, die an diejenigen der etwa symmetrischen Sehschärfekurve des menschlichen Auges angepasst sind.

Gemäss einer anderen Ausführungsform wird in den aufgenommenen Bewegtbildern mit Hilfe von Bildverarbeitungstechniken automatisch nach anderen Fluggeräten gesucht, wobei vorzugsweise der gesamte Flugsichtbereich systematisch im sequentiellen Takt abgescannt und ausgewertet wird und gegebenenfalls erforderliche Ausweichmanöver vorzugsweise automatisch durchgeführt werden. Im Falle der automatischen Suche nach anderen Fluggeräten und insbesondere der automatischen Durchführung von Ausweichmanövern kann die Kopplung zwischen der Blickrichtung 21 des Bodenpiloten 22 und der optischen Achse 33 der Kameraanordnung 5 entfallen, da bei dieser Ausführungsform auch kein Bodenpilot mehr erforderlich ist.

Die erfindungsgemässe Vorrichtung 1 zum Führen eines unbemannten Fluggerätes arbeitet wie folgt:
Mit Hilfe der Kameraanordnung 5, die gemäss Fig. 1 drei Bewegtbildkameras 25 - 27 mit unteschiedlichen Bildaufnahmewinkeln 30 - 32 aufweist, wird der Flugsichtbereich 6, d.h. der in Flugrichtung vor dem Fluggerät liegende Luftraum, insbesondere in Abhängigkeit und in Übereinstimmung mit der Blickrichtung 21 eines Bodenpiloten 22 auf eine Anzeigeeinrichtung 12 überwacht. Die von den einzelnen Bewegtbildkameras 25 - 27 aufgenommenen Bewegtbilder werden mittels Bildsignalleitungen 14 - 16 zu der Mischeinrichtung 13 übertragen, wo ein kombiniertes Bildsignal hergestellt wird, das über die Leitung 17 zur Sender-Empfänger-Einheit 7 übertragen wird. Von dort gelangt das Signal über die beiden Antennen 46, 47 zur Bodenstation 11 und zwar zunächst zur Empfänger-Sender-Einheit 10 und von dort über die Signalleitung 45 zur Anzeigeeinrichtung 12, wo das aus den Bildsignalen der drei genannten Bewegtbildkameras zusammengesetzte Bild als Gesamtbild angezeigt wird.

Ändert sich nun die Blickrichtung 21 des Bodenpiloten 2, so wird die neue Blickrichtung (in Fig. 1 nicht gezeigt) über die Lichtstrahlführung 50 durch die Blickrichtungs-Erfassungseinrichtung 20 ermittelt und über die Signalleitung 44, die beiden Einheiten 7, 10 und mit Hilfe der Signalleitung 35 zum Schwenkmechanismus 34 übertragen, welcher daraufhin die optische Achse 33 der Kameraanordnung 5 entsprechend der neuen Blickrichtung des Bodenpiloten einstellt. Der neue Flugsichtbereich wird dann, wie zuvor erläutert, in analoger Weise auf der Anzeigeeinrichtung 12 angezeigt, so dass der Bodenpilot 22 an der Bodenstation 11 in der Lage ist, den Flugsichtbereich des im Luftraum fliegenden, unbemannten Fluggerätes 2 zu überwachen.

Bei Feststellung eines potentiell auf Kollisionskurs befindlichen anderen Fluggerätes ist der Bodenpilot in der Lage, ein Ausweichmanöver mit Hilfe beispielsweise der Einrichtung 23 zum Fernsteuern des Fluggerätes und die Signalleitung 24 sowie die Empfänger-Sender-Einheit 10 mit Hilfe von weiteren, im Fluggerät vorgesehenen Steuer- und Signaleinheiten (nicht näher gezeigt) durchzuführen.

Damit ist es möglich, ein unbemanntes Fluggerät vom Boden aus nach Sichtflugregeln zu führen bzw. zu fliegen.

## Patentansprüche

1. Verfahren zum Führen eines unbemannten Fluggerätes (2) durch die folgenden Schritte:
(a) Aufnehmen von Bewegtbildern des Flugsichtbereiches, d.h. des vorausliegenden Luftraumes, an Bord des Fluggerätes;
(b) Übertragen der gemäss (a) aufgenommenen Bewegtbilder an eine Bodenstation (11);
(c) Anzeigen der gemäss (b) übertragenen Bewegtbilider,
**dadurch gekennzeichnet, dass**
das Aufnehmen der Bewegtbilder mit mindestens zwei unterschiedlichen Bildaufnahmewinkeln erfolgt,
die derart aufgenommenen Bewegtbilder einem Bodenpiloten in passender Überlagerung angezeigt werden, und
das Aufnehmen zumindest eines wesentlichen Teils der Bewegtbilder entsprechend der Blickrichtung des Bodenpiloten erfolgt und bei Feststellung anderer potentiell auf Kollisionskurs befindlicher Fluggeräte Ausweichmanöver durchgeführt werden.

2. Verfahren nach Anspruch 1, **dadurch gekennzeichnet, dass** schmalwinklige Bewegtbilder jeweils weitwinkligere Bewegtbilder überlagern.

3. Verfahren nach Anspruch 1 oder 2, **dadurch gekennzeichnet, dass** die Bewegtbilder in konzentrischer oder nahezu konzentrischer Überlagerung angezeigt werden.

4. Verfahren nach Anspruch 3, **dadurch gekennzeichnet, dass** der gemeinsame Mittelpunkt der überlagerten Bewegtbilder genau in Blickrichtung des Bodenpiloten liegt.

5. Verfahren nach einem der vorhergehenden Ansprüche, **dadurch gekennzeichnet, dass** die Bewegtbilder nicht mit scharfen Rändern sondern mit vorzugsweise stetig zum Bildrand zunehmender Transparenz überlagert werden.

6. Verfahren nach einem der vorhergehenden Ansprüche, **dadurch gekennzeichnet, dass** die schmalwinkligsten Bewegtbilder als vergrösserte Bewegtbilder gewonnen werden.

7. Verfahren nach einem der vorhergehenden Ansprüche, **dadurch gekennzeichnet, dass** das Aufnehmen der Bewegtbilder mit Bildaufnahmewinkeln und diesen jeweils zugeordneten Bildauflösungen erfolgt, die an diejenigen der etwa symmetrischen Sehschärfekurve des menschlichen Auges angepasst sind.

8. Verfahren nach einem der vorhergehenden Ansprüche, **dadurch gekennzeichnet, dass** in den aufgenommenen Bewegtbildern mit Hilfe von Bildverarbeitungstechniken automatisch nach anderen Fluggeräten gesucht wird, wobei vorzugsweise der gesamte Flugsichtbereich systematisch im sequentiellen Takt abgescannt und ausgewertet wird, und gegebenenfalls erforderliche Ausweichmanöver vorzugsweise automatisch durchgeführt werden.

9. Vorrichtung zum Führen eines unbemannten Fluggerätes, insbesondere zum Durchführen eines Verfahrens nach einem der vorhergehenden Ansprüche, mit
einer bordseitigen Kameraanordnung (5) zum Aufnehmen von Bewegtbildern des Flugsichtbereiches (6), d.h. des vorausgehenden Luftraumes,
einer bordseitigen Sender-Empfänger-Einheit (7) und einer bodenseitigen Empfänger-Sender-Einheit (10) zum Übertragen der aufgenommenen Bewegtbilder an eine Bodenstation (11),
einer Einrichtung (12) zum Anzeigen der übertragenen Bewegtbilder,
**gekennzeichnet durch**
eine derartige Anordnung und Ausbildung der Kameraanordnung (5), das die Bewegtbilder damit aus mindestens zwei unterschiedlichen Bildaufnahmewinkeln aufgenommen werden,
eine Mischeinrichtung (13) zur passenden Überlagerung der aufgenommenen Bewegtbilder,
eine Blickrichtungs-Erfassungseinrichtung (20), mit der die Blickrichtung (21) eines Bodenpiloten (22) erfassbar und das Aufnehmen zumindest eines Teils der Bewegtbilder entsprechend der Blickrichtung beeinflussbar ist, und
eine Einrichtung (23) zum Fernsteuern des Fluggerätes (2).

10. Vorrichtung nach Anspruch 9, **dadurch gekennzeichnet, dass** die Kameraanordnung (5) eine elektronische Bewegtbildkamera, vorzugsweise eine Videokamera, aufweist, mit der durch schnellen sequentiellen Wechsel von Tele- und Weitwinkelobjektiven ein sequentieller Datenstrom der Tele- und Weitwinkelbewegtbilder erzeugbar ist.

11. Vorrichtung nach Anspruch 9, **dadurch gekennzeichnet, dass** die Kameraanordnung (5) wenigstens zwei elektronische Bewegtbildkameras (25 - 27), vorzugsweise Videokameras, mit gestuften Bildaufnahmewinkeln vorzugsweise von "Tele" bis "Weitwinkel" aufweist.

12. Vorrichtung nach Anspruch 11, **dadurch gekennzeichnet, dass** die optischen Achsen (33) der wenigstens zwei Bewegtbildkameras (25 - 27) raumparallel zueinander ausgerichtet sind.

13. Vorrichtung nach einem der vorhergehenden Vorrichtungsansprüche, **dadurch gekennzeichnet, dass** wenigstens eine Kamera (25, 26, 27) der Kameraanordnung (5) um zwei Raumachsen, vorzugsweise die Nickachse und die Gierachse, ferngesteuert schwenkbar am Fluggerät (2) angeordnet ist.

14. Vorrichtung zumindest nach Anspruch 11, **dadurch gekennzeichnet, dass** die weitwinkligste Bewegtbildkamera (25) ortsfest am Fluggerät (2) installiert ist.

15. Vorrichtung nach einem der vorhergehenden Vorrichtungsansprüche, **dadurch gekennzeichnet, dass** die mittels der Kameraanordnung (5) aufgenommenen Bewegtbilder jeweils konzentrisch oder nahezu konzentrisch überlagert anzeigbar sind, wobei vorzugsweise der gemeinsame Mittelpunkt der überlagerten Bewegtbilder genau in Blickrichtung (21) des Bodenpiloten (22) angeordnet ist.

16. Vorrichtung nach einem der vorhergehenden Vorrichtungsansprüche, **dadurch gekennzeichnet, dass** die Überlagerung der angezeigten Bewegtbilder durch Komponenten der Bildverarbeitung derart gestaltet ist, dass die Bewegtbilder nicht mit scharfen Rändern sondern mit vorzugsweise stetig zum Bildrand zunehmender Transparenz versehen sind.

17. Vorrichtung nach einem der vorhergehenden Vorrichtungsansprüche, **dadurch gekennzeichnet, dass** die schmalwinkligste Bewegtbildkamera (27), vorzugsweise jede Bewegtbildkamera (25 - 27), bezüglich ihres Bildaufnahmewinkels (30 - 32) und ihrer diesem zugeordneten Bildauflösung so dimensioniert ist, dass die resultierenden Pixelauflösungen (41 - 43) der jeweiligen Bewegtbildkamera (25, 26, 27) an die etwa symmetrische Sehschärfekurve (36) des menschlichen Auges angepasst sind.

18. Vorrichtung zumindest nach Anspruch 13, **dadurch gekennzeichnet, dass** die Blickrichtungs-Erfassungseinrichtung (20) sowohl die Kopfstellung als auch die Augenbewegung des Bodenpiloten erfasst und die Kameraanordnung (5) dementsprechend steuerbar ist.
